# EUROPÄISCHE PATENTSCHRIFT

(11) **EP 2 526 295 B1**
(45) Veröffentlichungstag und Bekanntmachung des Hinweises auf die Patenterteilung: **18.03.2015**
(21) Anmeldenummer: 11702574.2
(22) Anmeldetag: 13.01.2011
(51) Int. Cl.: F03D 11/00, F16F 1/40

(54) **ELASTOMERFEDER MIT MECHANISCH REGULIERBARER STEIFIGKEIT**
ELASTOMERIC SPRING HAVING MECHANICALLY CONTROLLABLE STIFFNESS
RESSORT ÉLASTOMÈRE AVEC RIGIDITÉ RÉGLABLE DE FAÇON MÉCANIQUE

(30) Priorität: 19.01.2010 EP 10000451
(43) Veröffentlichungstag der Anmeldung: 28.11.2012
(73) Patentinhaber: FM Energie GmbH & Co. KG, 64646 Heppenheim (DE)
(72) Erfinder: Mitsch, Franz, 64646 Heppenheim (DE)
(74) Vertreter: Benz, Jürgen
(86) Internationale Anmeldenummer: PCT/EP2011/000107
(87) Internationale Veröffentlichungsnummer: WO 2011/088965

(56) Entgegenhaltungen:
- EP-A1- 1 566 543
- EP-A1- 1 887 248
- US-A1- 2007 090 269
- US-A1- 2008 308 980

## Beschreibung

Die Erfindung betrifft eine mechanisch regulierbare Elastomerlagerung basierend auf entsprechend angeordneten Federelementen, deren Federsteifigkeit sich durch verformbare Elastomerkörper, bzw. Elastomerschichten individuell einstellen, beziehungsweise vorspannen lässt.

Die Verformung der Elastomerschichten und damit der Federelemente wird erfindungsgemäß durch eine vollständig in das Federelement integrierte, Druck erzeugende Vorrichtung erreicht. Der Druck wird dabei durch außerhalb des Federelementes angebrachte und befestigte Verspannungsvorrichtungen erzeugt, welche in Kontakt mit der Druck erzeugenden Vorrichtung im Federelement stehen. Die erfindungsgemäßen Elastomerlagerungen, bzw. Elastomerfederelemente sind insbesondere zur Verwendung in Lagerungen bei Rotor- und Getriebekonstruktionen von großen Windkraftanlagen geeignet, können aber auch im Maschinen- und Fahrzeugbau vorteilhaft eingesetzt werden.

Elastische Federelemente sind bekannt und werden in vielen Bereichen der Technik vorrangig zur Dämpfung von Schwingungen und Kräften eingesetzt. Dabei hat das Federelement eine von der Art, Größe, Form und Anzahl der vorhandenen Elastomerschichten vorgegebene definierte Steifigkeit, die in der Regel nach Einbau des Federelementes nicht oder nicht wesentlich verändert werden kann.

Bei großen Windkraftanlagen mit Leistungen von mehr als 2 Megawatt werden häufig Mehrpunktlagerungen eingesetzt, welche die zum Teil starken auftretenden Kräfte und Schwingungen, insbesondere in Bezug auf Rotorblätter und Rotorwelle, aufnehmen und ausreichend dämpfen müssen. Daher müssen die elastischen Lagerelemente eine relativ große Steifigkeit aufweisen. Es ist dabei wünschenswert elastomere Lager zur Verfügung zu haben, bei denen die Federsteifigkeit regulierbar oder einstellbar ist, gegebenenfalls auch nach Einbau in eine Anlage oder Vorrichtung.

Eine Elastomerlagerung mit einstellbarer Steifigkeit ist beispielsweise aus der EP 1 566 543 bekannt. In dieser Anmeldung wird ein Federelement offenbart, bei dem sich eine Elastomerschicht zwischen einer Anschlussplatte und einer Endplatte und ggf. einer oder mehreren Zwischenplatten befindet, wobei die Anschlussplatte eine Öffnung mit einem Anschlussteil aufweist, durch welche mittels eines Verdrängungselementes in Form einer hydraulischen Flüssigkeit oder eines beweglichen Kolbenelementes Druck auf die Elastomerschicht ausgeübt werden kann, und somit zu einer Veränderung der Federlänge des Federelementes führt. Hierbei besteht in einer Ausführungsform das bewegliche Kolbenelement im wesentlichen aus einem Druckkolben mit einem mehr oder weniger voluminösen Kolbenkopf, welcher in der Regel mit einer harten Elastomerschicht ummantelt ist. Dieser Kolbenkopf wird durch eine Drückschraube, welche durch ein separates Metallstück, das auf das eigentliche Federelement aufgebracht ist, geführt, so dass bei Einschraubung in das Hohlgewinde im Metallstück der Kolbenkopf in den Bereich des Verdrängungselsatomers des Federelementes gepresst wird.

Die Konstruktion des Federelementes ist dabei auf die Form und Größe des Presskolbens abgestimmt, was zur Folge hat, dass die Herstellung des Federelementes entsprechend aufwendiger und damit kostspieliger ist, weil das Federelement eine dem Kolben entsprechende Hohlform aufweisen muss. In der Praxis hat sich überdies gezeigt, dass ein solcher Kolben, der durch das separate Metallstück geführt werden muss bei Verspannung / Entspannung oft verkantet, so dass eine Feinregulierung der Federsteifigkeit oftmals sich als schwierig erweist, oder manchmal gar nicht möglich ist. Überdies ergaben sich zuweilen Probleme mit der gleichmäßigen Druckverteilung auf das elastomere Federelement.

Es bestand somit die Aufgabe, ein entsprechendes Federelement zur Verfügung zu stellen, welches in analoger Weise funktioniert, jedoch die beschriebenen bekannten Nachteile der entsprechenden Lagerungen des Standes der Technik nicht aufweist.

Die Aufgabe wurde gelöst durch die Bereitstellung eines Federelementes wie es nachfolgend und in den Ansprüchen beschrieben ist.

Gegenstand der Erfindung ist somit ein in seiner Steifigkeit einstellbares Federelement (9), dass im wesentlichen ein elastomeres Dämpfungselement (15) und ein elastomeres Druckelement (16) umfasst, welche beide vorzugsweise in einer geschlossenen integralen Bauform vorliegen. Prinzipiell ist es aber auch möglich, dass Dämpfungselement und Druckelement getrennte Einheiten sind, welche aufeinander oder aneinander gefügt und durch weitere Befestigungsmittel vorzugsweise reversibel zusammengehalten werden.

Das Dämpfungselement besteht im wesentlichen aus einem Elastomerteil (1) (2), welches nach unten durch eine untere Abschlussplatte (13) und nach oben durch das anliegende druckstabile Druckelement (16) begrenzt wird, und im Inneren ein oder mehrere parallel zur unteren Abschlussplatte angeordnete unelastische, voneinander durch Elastomerschichten (2) getrennte Zwischenplatten (14) aufweist. Die Zwischenplatten besitzen eine entsprechend der vertikalen Achse des Federelementes angeordnete zylindrische Bohrung (3), die von einem Elastomerkern oder Elastomervolumen (1) ausgefüllt ist.

Das Druckelement (16) ist oder umfasst im Wesentlichen eine druckstabile vorzugsweise metallene Schale (4), welche in ihrem Boden eine zylindrische Bohrung besitzt, die deckungsgleich mit der Bohrung (3) des Dämpfungselementes ist. Die mit besagter Bohrung in ihrem Boden ausgestattete Schale ist von komprimierbarem Elastomermaterial (5) und einem Druckstück (6) ausgefüllt, wobei das Druckstück (6) im nicht-vorgespannten Zustand des Federelementes einen Teil der oberer Begrenzung (12) des Druckelementes (16) bildet und seitlich und unterhalb von elastomerem Kompressionsmaterial (5) umgeben, bzw. in dieses eingebettet ist. Dieses Elastomermaterial (5) der Druckschale (4) steht, wie beschrieben, in direktem Kontakt mit dem Elastomerkern (1) des Dämpfungselementes (15), so dass der über das Druckstück (6) vermittelte Druck an die eigentliche Dämpfungseinheit (15) weitergegeben und somit je nach ausgeübten Druck eine Veränderung der Federlänge des Dämpfungselementes (15) erzielt wird.

In einer besonderen und besonders vorteilhaften Ausführungsform der Erfindung, besitzt die vorzugsweise metallene Druckschale (4) an der oberen Fläche (12) eine Öffnung, die so geformt ist, dass das vorzugsweise scheibenförmige Druckstück (6) passend und bündig durch diese Öffnung passt, wobei allerdings noch zusätzlich Platz für eine Trennfuge oder einen Trennspalt (19) vorgesehen ist, der ebenfalls mit Elastomermaterial (5) ausgefüllt ist. Dabei ist das Elastomermaterial in diesem Bereich erfindungsgemäß nicht fest mit dem Rand der Öffnung der Druckschale (4) verbunden sondern liegt nur an diesem an. Vorzugsweise liegt das Elastomermaterial auch in dem oberen Bereich der Druckschale unterhalb der Öffnung für das Druckstück nur lose an, ist also in diesem oberen Bereich im Gegensatz zum unterem Bereich der Druckschale nicht mit der Druckschalenwandung fest verbunden. Als oberer Bereich der Druckschale, in dem das Elastomer nur an dieser lose anliegt, ist etwa 10 bis maximal 50% der Dicke des Druckschalenelementes anzusehen, vorzugsweise 10 bis 30%, insbesondere 20 - 30%. Im Gegensatz hierzu, ist erfindungsgemäß das Elastomermaterial (5) im Bereich des Trennspaltes (19) sowie im Bereich darunter mit dem Druckstück(6) fest verbunden (Vulkanisierung, Klebung etc.), so dass das Druckstück als Ganzes an seiner seitlichen und unteren, in das Federelement hineinreichenden Fläche vollständig von Elastomermaterial (5) umgeben und mit diesem vorzugsweise fest umgeben ist.

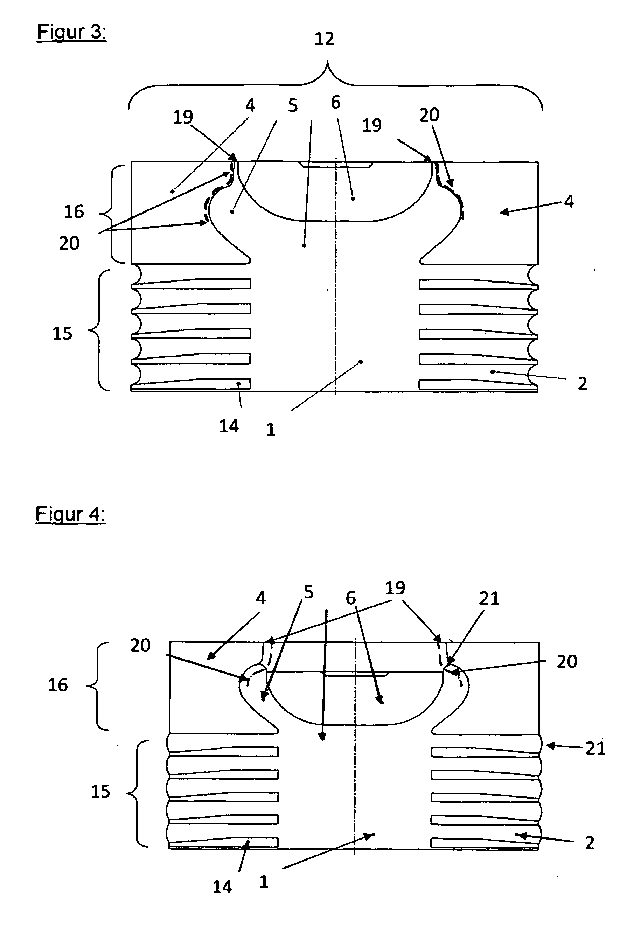

Der Trennspalt (19) ist erfindungsgemäß klein genug, so dass beim Einführen des Druckstücks über eine Druck erzeugende Vorrichtung (18) kein oder im Wesentlichen kein Elastomermaterial nach oben über die Begrenzungsfläche (12) des Druckelementes (4) hinausgedrückt wird, sondern der Druck vollständig bzw. im Wesentlichen vollständig zur Kompression des Elastomermaterials (5) und (1) im Federelement (9) selbst führt (Figur 3, 4). Nur dadurch, ist eine optimale Feinjustierung der Vorspannung des Federelementes zu erreichen. Erfindungsgemäß ist der umlaufende Trennspalt zwischen 1 und 10 mm, vorzugsweise zwischen 2 und 5 mm dick. In der genannten Ausführungsform besitzt das Druckelement (4) vorteilhafterweise nicht die Form einer typischen Schale, sondern weist wegen der schmalen oberen Öffnung und des notwendigen ausreichenden Elastomervolumens (5) vorzugsweise eine im Querschnitt bauchige Form auf, wie in Figur 3 und 4 dargestellt.

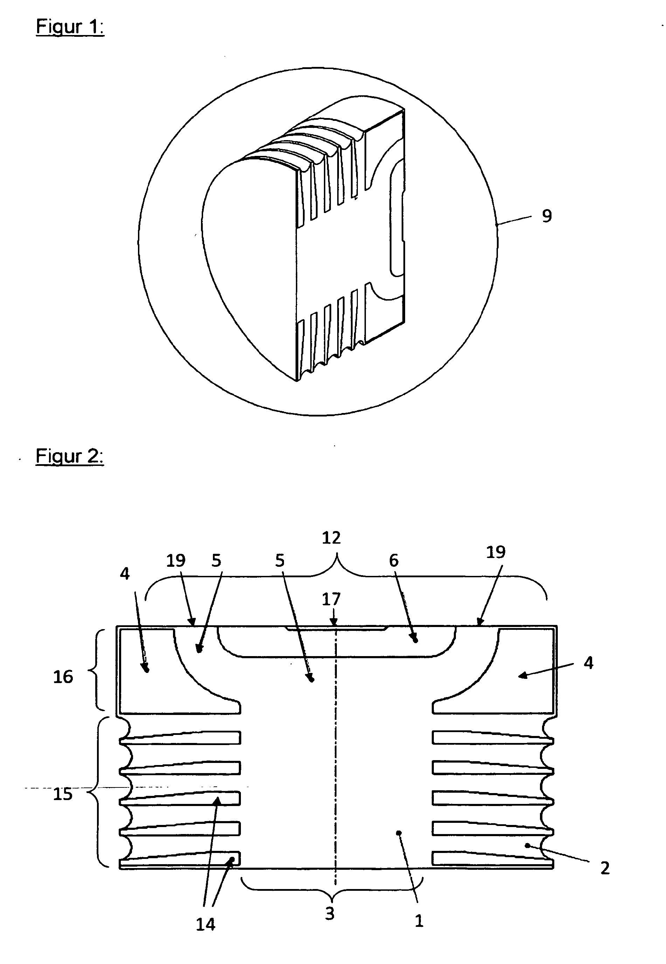

In einer weiteren Ausführungsform kann das Druckelement (4) auch die in Figur 1 und 2 dargestellte Form einer typischen Schale aufweisen, wobei auch hier der Abstand zwischen dem Rand der oberen Öffnung des Bauteils und dem Rand des in der Öffnung angebrachten Druckstücks (6) möglichst gering gehalten werden sollte (vorzugsweise 5 - 20 mm), damit nicht zu viel Elastomer bei Kompression nach oben durch den Trennspalt (19) gedrückt wird.

Gegenstand der Erfindung ist ferner die Verwendung eines diesbezüglichen Federelementes zur Dämpfung von Schwingungen durch dynamische Einstellbarkeit der Steifigkeit von Elastomerschichten in Lagerkomponenten in Maschinen, Fahrzeugen und Windkraftanlagen.

Insbesondere ist die Lagerung zur Verwendung in Paketkupplungen geeignet, wie sie beispielsweise in Abb. 3 oder 4 dargestellt ist.

Ein Vorteil der erfindungsgemäßen Lagerung ist, dass keine gleitenden Teile wie bei der Pressbolzenlösung der EP 1 566 543 notwendig sind. In dem erfindungsgemäßen Lager stellt der Pressbolzen vielmehr gemeinsam mit dem Gummi-Metall-Element, dem eigentlichen Dämpfungselement (15), eine integrale funktionelle Einheit dar, bei der keinen langen Wege, und / oder ein größerer Platzbedarf notwendig ist.

Im folgenden wird die Erfindung näher beschrieben.

Kurze Beschreibung der gezeigten Abbildungen:
- Abb. 1:: perspektivische Sicht des erfindungsgemäßen Federelements
- Abb. 2:: Längsschnitt durch ein elastomeres Federelement gemäß der Erfindung, welches einen breiten Trennspalt (19) aufweist.
- Abb. 3:: Längsschnitt durch ein elastomeres Federelement gemäß der Erfindung, welches, einen schmalen Trennspalt (19) aufweist im ungespannten Zustand.
- Abb. 4:: Längsschnitt durch ein elastomeres Federelement gemäß der Erfindung, welches, einen schmalen Trennspalt (19) aufweist im vorgespannten Zustand.
- Abb. 5:: Paketkupplung mit eingebauten erfindungsgemäßem Federelement.
- Abb. 6:: Teilsegment von Abb. 4.

Die in den Abbildungen und der Beschreibung verwendeten Bezugsgrößen haben dabei die in der folgenden Tabelle niedergelegten Bezeichnungen:

| **Bezugsgröße** | **Bedeutung** |
|---|---|
| (1) | Elastomervolumen Dämpfungselement, mittig |
| (2) | Elastomervolumen Dämpfungselement, zwischen den Platten |
| (3) | Bohrung Zwischenplatten, Bereich, den das Ealstomer (1) einnimmt |
| (4) | Druckschale |
| (5) | Elastomervolumen im Bereich der Druckschale (4) und des Trennspaltes |
| (6) | Druckstück |
| (7) | Stern - Paketkupplung |
| (8) | Gegenstück Stern Paketkupplung |
| (9) | Erfindungsgemäßes Federelement (gesamt) |
| (10) | Befestigungsschraube Paketkupplung |
| (11) | Schraubflansch |
| (12) | Obere Begrenzungsfläche des Federelements |
| (13) | Untere Abschlussplatte |
| (14) | Zwischenplatte Federelement im Dämpfungselement |
| (15) | Dämpfungselement |
| (16) | Druckelement |
| (17) | Auflagefläche / Befestigung |
| (18) | Verspannungsvorrichtung auf (17) |
| (19) | Trennspalt, mit Elastomermaterial ausgefüllt |
| (20) | Bereich ohne Verbindung von Elastomerschicht (5) mit Druckschale (4) |
| (21) | Elatomer-Wulst durch Vospannung erzeugt |

Ein typisches Federelement gemäß der Erfindung ist in den Abbildungen 1 - 4 dargestellt.

Das Federelement ist in diesen Ausführungsformen vorzugsweise als ein im Querschnitt rundes oder rechteckiges Bauelement ausgestaltet, kann aber auch andere Formen und Gestalt annehmen. Abb. 1 zeigt eine hier runde Abschlussplatte. Oberhalb der Abschlussplatte (13) befindet sich eine Elastomerschicht (1) mit einer Dicke, je nach Größe des Elementes in der Regel zwischen ungefähr 1 und 10 cm. Größere und kleiner Elemente sind grundsätzlich möglich. Die Elastomerschicht ist fest mit der Platte (13) verbunden und verteilt sich auch (2) zwischen die das Element stabilisierenden Zwischenplatten (14), mit denen es gegebenenfalls ebenfalls fest verbunden ist (Verklebung / Vulkanisierung).

Das Elastomervolumen (1) steht direkt mit dem elastomeren Kompressionsvolumen (5) in der Schale (4) der Druckeinheit (16) in Verbindung. Die Druckschale (4) ebenso wie die Druckeinheit (16) sind aus druckfestem Material, vorzugsweise aus Metall. Die Zwischenplatten (14) sind vorzugsweise ebenfalls auch aus Metall, können aber auch durch andere harte Materialien, die eine gewisse Biegefähigkeit aufweisen, ersetzt werden. Vorzugsweise sind die Zwischenplatten in Form von breiten Ringplatten gestaltet, deren Mittelpunkt sich vorzugsweise auf Höhe des Druckstücks (6) bzw. der Bohrung in der Druckschale (4) befindet.

Im Randbereich weist die Elastomerschicht (2) zwischen den Platten konkave bzw. konvexe Konturen auf, die sich je nach Komprimierungszustand ändern können. Außer in dem bereits genannten Bereich um den Anschlussstutzen herum ist die Elastomerschicht mit den beteiligten Rand- und Zwischenplatten beispielsweise durch Verklebung oder Vulkanisierung fest verbunden.

Neuartig im Vergleich zu dem Federelement der EP 1 566 543 ist die Druckeinheit (16), welche fest verbunden ist mit dem elastomeren Federelement (15) und mit diesem eine geschlossene Baueinheit bildet. Diese Druckeinheit, die gegenüber der Abschlussplatte (13) angeordnet ist und das gesamte Federlelement (9) nach oben abschließt, umfasst im wesentlichen eine druckfeste Schale, vorzugsweise aus Metall, die einen Durchmesser aufweist, welcher mindestens so groß wir der Durchmesser der zylindrischen Bohrung der Zwischenplatten, bzw. des Elastomervolumens (1). Der Boden der Schale (4) weist ebenfalls eine Öffnung aus, deren Durchmesser vorzugsweise dem Durchmesser der besagten zylindrischen Bohrung der Zwischenplatten (14) entspricht. Das Innere der Schale ist mit dem elastomeren Kompressionsvolumen (5) ausgefüllt. Dieses Elastomer ist in Bezug auf seine Steifigkeit weicher oder mindestens genau so hart wie das Elastomervoulmen (1) (2) des eigentlichen Federelementes, das unmittelbar mit ihm in Kontakt ist.

Das Kompressionsvolumen (5) umfasst mittig am oberen nach außen weisenden Rand des Federlementes (9) ein Druckstück (6) auf, welches, in einfachsten Fall eine massive druckstabile runde, eckige oder anders geformte Scheibe oder Platte ist. Dieses Druckstück liegt entweder auf dem Kompressionselastomer (5) auf bzw. ist mit diesem verbunden, oder aber ist vorzugsweise in dieses eingebettet, so dass seine Unterseite und Seitenflächen vom Elastomer (5) umgeben sind, während die Oberseite einen bündigen Abschluss mit der oberen Kontur des Federelementes (9) bildet.

Auf diese nach außen weisende Fläche des Druckstücks wird erfindungsgemäß mittels einer Verspannungsvorrichtung (18) gezielt und einstellbar Druck ausgeübt, so dass das Druckstück(6) in das Kompressionsvolumen gepresst wird. Das verdrängte Material des Elastomers (5) in der Druckschale (4) verpresst entsprechend des ausgeübten Druckes somit die Elastomer / Zwischenplatten Konstruktion des eigentlichen Dämpfungselementes (15), wodurch die Steifigkeit dieses Bauteils gezielt und einfach reguliert werden kann. Die Verspannungseinrichtung kann mechanischer oder hydraulischer Natur sein.

Damit der durch das Druckstück (6) ausgeübte Druck nicht Elastomermaterial (5) aus der Druckschale (4) nach oben, bzw. außen aus dem Bauteil herausdrückt, und somit an die eigentliche Dämpfungseinheit (15) weitergeben kann, ist das erfindungsgemäße Bauteil entweder entsprechend in die zu dämpfende Vorrichtung so eingebaut, dass ein Herausquetschen verhindert wird, oder aber das Federelement umfasst zusätzlich eine obere Abschlussplatte, welche eine gemäß dem Druckstück (6) entsprechend geformte und angeordnete Öffnung aufweist, so dass kein Elastomermaterial nach oben aus der Druckschale bei Verpressung über das Druckstück (6) herausgedrückt werden kann. Ein solche Abschlussplatte bildet entweder mit dem Federelement eine feste Einheit oder ist lösbar, beispielsweise durch Verschraubung, mit diesem verbunden.

Das Druckstück (6) sollte so dimensioniert sein, dass es zwar ausreichend groß zur Aufnahme der Verspannungsvorrichtung (18) ist, jedoch sollte es noch ausreichend Platz in der Druckschale (4) für das umgebende Kompressionselastomer (5) lassen, so dass dieses ausreichend zusammengepresst werden kann, ohne dass dabei das Druckstück den Boden der Druckschale (4) berührt.

Das Druckstück (6) selbst kann eine Auflagefläche oder eine Halteeinrichtung für die Verspannungsvorrichtung (18) besitzen. Diese umfasst im einfachsten Fall eine Schraube oder einen Schraubbolzen die/der in einem Gewinde außerhalb des Federelementes (9) in Richtung des Druckstücks bewegt wird und letzteres in das Kompressionsvolumen (5) presst.

Die erfindungsgemäß für die Bauteile (15) und (16) verwendeten Elastomermaterialien bestehen im wesentlichen aus einem Naturkautschuk, einem Naturkautschukderivat oder aus einem geeigneten elastischen polymeren Kunststoff oder Kunststoffgemisch. Die Elastomerschicht kann erfindungsgemäß unterschiedliche Härte ("Shore-Härte") und unterschiedliche Dämpfungseigenschaften aufweisen, entsprechend den gewünschten Anforderungen. Vorzugsweise werden Elastomere mit einer Härte von 20 bis 100 Shore A, insbesondere 30 bis 80 Shore A verwendet. Die Herstellung derartiger Elastomere unterschiedlicher Härte ist im Stand der Technik bekannt und in der einschlägigen Literatur hinreichend beschrieben. Vorzugsweise werden handelsübliche Naturkautschuke oder Kunststoffe eingesetzt.

Vorzugsweise besitzt das Elastomermaterial in der Druckschale (4) bzw. des Druckelementes (16) eine geringere Steifigkeit aus als das elastomere Material des Dämpfungselementes (15).

Die nicht-elastomeren Zwischenplatten (2) sind erfindungsgemäß aus weitestgehend unelastischen Werkstoffen mit geringer Kompressibilität gefertigt. Vorzugsweise sind dies Metallbleche, aber auch andere Materialien, wie harte Kunststoffe, Verbundwerkstoffe oder karbonfaserhaltige Werkstoffe sind einsetzbar. Die Zwischenbleche und die Elastomermaterialien (4) werden in der Regel durch Vulkanisierung miteinander verbunden.

Wie bereits erwähnt, sind die beschriebenen erfindungsgemäßen Federelemente besonders geeignet für einen Einsatz als Lagerpunkte in Maschinen, Fahrzeugen, vorzugsweise aber in Windkraftanlagen.

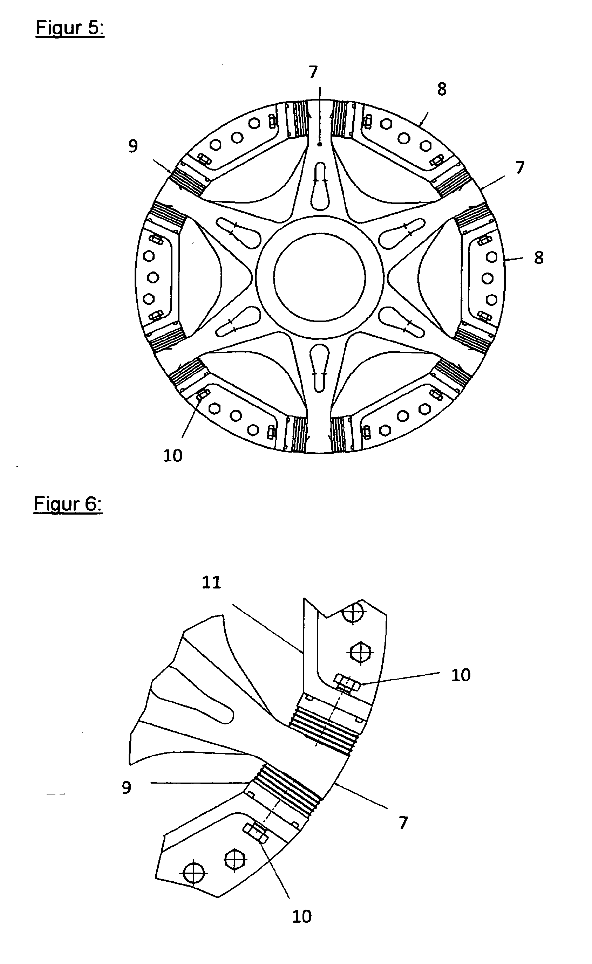

Die erfindungsgemäßen Federelemente sind ferner auch als Dämpfungselemente in Paketkupplungen hervorragend geeignet (Figuren 5, 6).

## Patentansprüche

1. In seiner Steifigkeit einstellbares elastisches Federelement (9) umfassend ein
(a) elastomeres Dämpfungselement (15) und
(b) ein elastomeres Druckelement (16),
**dadurch gekennzeichnet, dass**
(i) das Dämpfungselement im Wesentlichen ein Elastomerteil (1, 2) umfasst, welches nach unten durch eine untere Abschlussplatte (13) und nach oben durch das Druckelement (16) begrenzt wird, und im Inneren ein oder mehrere parallel zur unteren Abschlussplatte angeordnete unelastische, voneinander durch Elastomerschichten (2) getrennte Zwischenplatten (14) aufweist, welche eine entsprechend der vertikalen Achse des Federelementes angeordnete zylindrische Bohrung (3) besitzen, die von einem Elastomerkern (1) ausgefüllt ist, und
(ii) das Druckelement (16) die Form einer druckstabilen Schale (4) aufweist, welche in ihrem Boden eine zylindrische Bohrung besitzt, die deckungsgleich mit der angrenzenden Bohrung (3) des Dämpfungselementes ist, und von komprimierbarem Elastomermaterial (5) und einem Druckstück (6) ausgefüllt ist, wobei das Druckstück (6) im nicht-vorgespannten Zustand des Federelementes einen Teil dessen oberer horizontaler Begrenzung (12) bildet und seitlich und unterhalb von elastomerem Kompressionsmaterial (5) umgeben, bzw. in diese eingebettet ist, das in direktem Kontakt mit dem Elastomerkern (1) des Dämpfungselementes (15) steht,
so dass der über das Druckstück (6) vermittelte Druck an die eigentliche Dämpfungseinheit (15) weitergegeben und somit je nach ausgeübten Druck eine Veränderung der Federlänge des Dämpfungselementes (15) durch Kompression des Elastomerkerns (1) erzielt wird.

2. Elastisches Federelement nach Anspruch 1, **dadurch gekennzeichnet, dass** Druckschale (4) und Druckstück (6) im Bereich der oberen Begrenzung (12) von einem umlaufenden Trennspalt (19) getrennt sind, welcher mit dem Elastomermaterial (5) ausgefüllt ist.

3. Elastisches Federelement nach Anspruch 2, **dadurch gekennzeichnet, dass** der Trennspalt (19) 2 - 5 mm dick ist.

4. Elastisches Federelement nach einem der Ansprüche 2 oder 3, **dadurch gekennzeichnet, dass** das Elastomermaterial (5) im Bereich des Trennspaltes (19) und des oberen Teil der Druckschale (4) nicht fest mit der inneren Wandung der Druckschale (4) verbunden ist.

5. Elastisches Federelement nach Anspruch 4, **dadurch gekennzeichnet, dass** das Elastomermaterial (5) im unteren Teil der Druckschale (4) fest mit der inneren Wandung der Druckschale (4) in diesem Bereich verbunden ist.

6. Elastisches Federelemente nach einem der Ansprüche 1-5, **dadurch gekennzeichnet, dass** das Elastomermaterial (5) mit dem Druckstück (6) fest verbunden ist.

7. Elastisches Federelement nach Anspruch 1, **dadurch gekennzeichnet, dass** das Druckstück (6) eine Auflagefläche oder eine Befestigungseinheit (17) aufweist für eine außerhalb des Federelementes befindliche Verspannungsvorrichtung (18).

8. Elastisches Federelement nach einem der Ansprüche 1-7, **dadurch gekennzeichnet, dass** die Dicke des Elastomermaterials (5) des Druckelementes (16) mindestens doppelt so groß ist, wie der maximale Kompressionsweg, den das Druckstück (6) in Richtung des Dämpfungselementes (15) mittels der Verspannungsvorrichtung (18) gedrückt wird.

9. Elastisches Federelement nach einem der Ansprüche 1 - 8, **dadurch gekennzeichnet, dass** das Druckstück (6) in seiner äußeren Kontur und Form der inneren Kontur und Form der Druckschale (4) des Druckelementes (16) nachgebildet ist.

10. Elastisches Federelement nach einem der Ansprüche 1 - 9, **dadurch gekennzeichnet, dass** Dämpfungselement (15) und Druckelement (16) eine äußere im wesentlichen runde oder rechteckige Form besitzen.

11. Elastisches Federelement nach einem der Ansprüche 1 - 10, **dadurch gekennzeichnet, dass** das Druckstück (6) eine äußere im wesentlichen runde oder rechteckige Form besitzt.

12. Elastisches Federelement nach einem der Ansprüche 1 - 11, **dadurch gekennzeichnet, dass** der Elastomerkern (1), das Elastomermaterial (5) und das Druckstück (6) zentral mittig im Federelement (9) angeordnet sind.

13. Elastisches Federelement nach einem der Ansprüche 1 - 12, **dadurch gekennzeichnet, dass** Dämpfungselement (15) und Druckelement (16) in einer geschlossenen integralen Bauform vorliegen.

14. Elastisches Federelement nach einem der Ansprüche 1 - 12, **dadurch gekennzeichnet, dass** das Elastomermaterial im Dämpfungselement (15) eine geringerer Steifigkeit aufweist als das Elastomermaterial im Druckelement (16)

15. Verwendung eines Federelementes nach einem der Ansprüche 1 - 14 in Lagerungen von Rotor- und oder Getriebebauteilen von Windkraftanlagen oder für Paketkupplungen in Fahrzeugen und Maschinen.

## Claims

1. Elastic spring element (9) of adjustable stiffness, comprising an
(a) elastomeric damping element (15) and
(b) an elastomeric pressure element (16),
**characterised in that**
(i) the damping element essentially comprises an elastomer part (1, 2), which is limited at the bottom by a lower terminal plate (13) and at the top by the pressure element (16), and has in the interior one or more non-elastic intermediate plates (14) which are arranged parallel to the lower terminal plate and are separated from one another by elastomer layers (2) and which have a cylindrical hole (3) which is arranged in accordance with the vertical axis of the spring element and is filled by an elastomer core (1), and
(ii) the pressure element (16) has the shape of a pressure-stable bowl (4), which has in its base a cylindrical hole which is congruent with the adjacent hole (3) of the damping element, and is filled by compressible elastomer material (5) and a pressure piece (6), where the pressure piece (6) in the non-pretensioned state of the spring element forms a part of the upper horizontal limit (12) thereof and is surrounded at the sides and below by, or is embedded in, elastomeric compression material (5), which is in direct contact with the elastomer core (1) of the damping element (15),
so that the pressure mediated via the pressure piece (6) is transmitted to the actual damping unit (15), and a change in the spring length of the damping element (15) is thus achieved by compression of the elastomer core (1), depending on the pressure exerted.

2. Elastic spring element according to Claim 1, **characterised in that** pressure bowl (4) and pressure piece (6) are separated in the region of the upper limit (12) by a circumferential separation gap (19), which is filled with the elastomer material (5).

3. Elastic spring element according to Claim 2, **characterised in that** the separation gap (19) is 2 - 5 mm thick.

4. Elastic spring element according to one of Claims 2 or 3, **characterised in that** the elastomer material (5) in the region of the separation gap (19) and the upper part of the pressure bowl (4) is not firmly connected to the inside wall of the pressure bowl (4).

5. Elastic spring element according to Claim 4, **characterised in that** the elastomer material (5) in the lower part of the pressure bowl (4) is firmly connected to the inside wall of the pressure bowl (4) in this region.

6. Elastic spring element according to one of Claims 1 - 5, **characterised in that** the elastomer material (5) is firmly connected to the pressure piece (6).

7. Elastic spring element according to Claim 1, **characterised in that** the pressure piece (6) has a support surface or an attachment unit (17) for a tensioning device (18), which is located outside the spring element.

8. Elastic spring element according to one of Claims 1 - 7, **characterised in that** the thickness of the elastomer material (5) of the pressure element (16) is at least twice as large as the maximum compression distance by which the pressure piece (6) is forced in the direction of the damping element (15) by means of the tensioning device (18).

9. Elastic spring element according to one of Claims 1 - 8, **characterised in that** the outer shape of the pressure piece (6) mirrors the inner shape of the pressure bowl (4) of the pressure element (16).

10. Elastic spring element according to one of Claims 1 - 9, **characterised in that** damping element (15) and pressure element (16) have an outer essentially round or rectangular shape.

11. Elastic spring element according to one of Claims 1 - 10, **characterised in that** the pressure piece (6) has an outer essentially round or rectangular shape.

12. Elastic spring element according to one of Claims 1 - 11, **characterised in that** the elastomer core (1) of the elastomer material (5) and the pressure piece (6) are arranged centrally in the middle of the spring element (9).

13. Elastic spring element according to one of Claims 1 - 12, **characterised in that** damping element (15) and pressure element (16) are in a closed integral design.

14. Elastic spring element according to one of Claims 1 - 12, **characterised in that** the elastomer material in the damping element (15) has a lower stiffness than the elastomer material in the pressure element (16)

15. Use of a spring element according to one of Claims 1 - 14 in bearings of rotor and/or gearbox components of wind turbines or for package clutches in vehicles and machines.

## Revendications

1. Elément de ressort élastique (9) de raideur réglable, comprenant :
(a) un élément d'amortissement élastomérique (15) et
(b) un élément de pression élastomérique (16),
**caractérise en ce que** :
(i) l'élément d'amortissement comprend de façon essentielle une partie en élastomère (1, 2), laquelle est limitée au fond par une plaque terminale inférieure (13) et au sommet par l'élément de pression (16), et comporte à l'intérieur une ou plusieurs plaque(s) intermédiaire(s) non élastique(s) (14) qui est/sont agencée(s) parallèlement à la plaque terminale inférieure et qui sont séparées les unes des autres par des couches en élastomère (2) et qui comporte(nt) un trou cylindrique (3) qui est agencé en concordance avec l'axe vertical de l'élément de ressort et qui est rempli par une âme en élastomère (1), et
(ii) l'élément de pression (16) présente la forme d'un bol stable en pression (4), lequel comporte dans sa base un trou cylindrique qui est congruent avec le trou adjacent (3) de l'élément d'amortissement et qui est rempli par un matériau d'élastomère compressible (5), et comporte une pièce de pression (6), où la pièce de pression (6), dans l'état non en prétension de l'élément de ressort, forme une partie de sa limite horizontale supérieure (12) et est entourée au niveau des côtés et au dessous par un matériau de compression élastomérique (5) ou est noyée dans ce matériau, lequel est en contact direct avec l'âme en élastomère (1) de l'élément d'amortissement (15),
de telle sorte que la pression exercée via la pièce de pression (6) soit transmise à l'unité d'amortissement réelle (15), et qu'une modification de la longueur de ressort de l'élément d'amortissement (15) soit ainsi réalisée par compression de l'âme en élastomère (1), en fonction de la pression exercée.

2. Elément de ressort élastique selon la revendication 1, **caractérisé en ce que** le bol de pression (4) et la pièce de pression (6) sont séparés dans la région de la limite supérieure (12) par un espace de séparation circonférentiel (19), lequel est rempli par le matériau d'élastomère (5).

3. Elément de ressort élastique selon la revendication 2, **caractérisé en ce que** l'espace de séparation (19) est d'une épaisseur de 2 - 5 mm.

4. Elément de ressort élastique selon l'une des revendications 2 ou 3, **caractérisé en ce que** le matériau d'élastomère (5) dans la région de l'espace de séparation (19) et de la partie supérieure du bol de pression (4) n'est pas fermement connecté à la paroi interne du bol de pression (4).

5. Elément de ressort élastique selon la revendication 4, **caractérisé en ce que** le matériau d'élastomère (5) dans la partie inférieure du bol de pression (4) est fermement connecté à la paroi interne du bol de pression (4) dans cette région.

6. Elément de ressort élastique selon l'une des revendications 1 - 5, **caractérisé en ce que** le matériau d'élastomère (5) est fermement connecté à la pièce de pression (6).

7. Elément de ressort élastique selon la revendication 1, **caractérisé en ce que** la pièce de pression (6) comporte une surface de support ou une unité de fixation (17) pour un dispositif de mise sous tension (18), lequel est situé à l'extérieur de l'élément de ressort.

8. Elément de ressort élastique selon l'une des revendications 1 - 7, **caractérisé en ce que** l'épaisseur du matériau d'élastomère (5) de l'élément de pression (16) est au moins deux fois plus grande que la distance de compression maximum sur laquelle la pièce de pression (6) est forcée dans la direction de l'élément d'amortissement (15) au moyen du dispositif de mise sous tension (18).

9. Elément de ressort élastique selon l'une des revendications 1 - 8, **caractérisé en ce que** la forme externe de la pièce de pression (6) est en miroir la forme interne du bol de pression (4) de l'élément de pression (16).

10. Elément de ressort élastique selon l'une des revendications 1 - 9, **caractérisé en ce que** l'élément d'amortissement (15) et l'élément de pression (16) présentent une forme externe essentiellement ronde ou rectangulaire.

11. Elément de ressort élastique selon l'une des revendications 1 - 10, **caractérisé en ce que** la pièce de pression (6) présente une forme externe essentiellement ronde ou rectangulaire.

12. Elément de ressort élastique selon l'une des revendications 1 - 11, **caractérisé en ce que** l'âme en élastomère (1) du matériau d'élastomère (5) et la pièce de pression (6) sont agencées centralement dans le milieu de l'élément de ressort (9).

13. Elément de ressort élastique selon l'une des revendications 1 - 12, **caractérisé en ce que** l'élément d'amortissement (15) et l'élément de pression (16) sont selon une conception d'un seul tenant fermée.

14. Elément de ressort élastique selon l'une des revendications 1 - 12, **caractérisé en ce que** le matériau d'élastomère dans l'élément d'amortissement (15) présente une raideur inférieure à celle du matériau d'élastomère dans l'élément de pression (16)

15. Utilisation d'un élément de ressort selon l'une des revendications 1 - 14 dans des paliers de rotor et/ou des composants de boîte de vitesses d'éoliennes ou pour des embrayages package dans des véhicules et des machines.
